# DEMANDE DE BREVET EUROPEEN

(11) **EP 1 014 285 A1**
(43) Date de publication de la demande: **28.06.2000**
(21) Numéro de dépôt: 98440297.4
(22) Date de dépôt: 22.12.1998
(51) Int. Cl.: G06F 17/60

(54) **Procédé et équipement pour le traitement de documents, notamment de documents comptables**

(71) Demandeur: Lemoine, Jean-Luc, 68270 Ruelisheim (FR)
(72) Inventeur: Lemoine, Jean-Luc, 68270 Ruelisheim (FR)
(74) Mandataire: Nithardt, Roland

(57) **Abrégé**

La présente invention concerne un procédé de traitement de documents qui allège considérablement le circuit de traitement desdits documents et qui simplifie notamment leur classement et leur archivage.

Ledit procédé de traitement de documents (1) et notamment de documents comptables, est caractérisé en ce que l'on procède, du côté d'une unité d'entrée (7) de ces documents à leur identification par attribution d'un ordre unique en effectuant une numération physique, puis à une numérisation de ces documents suivie de leur transmission, sous forme numérisée, vers une unité de traitement (5), ces documents étant ensuite traités puis rapprochés et liés à un système de gestion préétabli desdits documents du côté de cette unité de traitement (5), les documents traités étant enfin retournés vers l'unité d'entrée (7) pour exploitation.

## Description

La présente invention concerne un procédé pour le traitement de documents et en particulier de documents comptables.

Elle concerne également un équipement approprié pour assurer la mise en oeuvre de ce procédé.

Le traitement traditionnel de documents et plus spécifiquement de documents comptables, implique la manipulation multiple de ces documents par de nombreuses personnes et un classement final conçu pour permettre à diverses personnes, notamment aux vérificateurs tels que les experts comptables et les commissaires aux comptes, de retrouver aisément les documents classés ou archivés. Cette manipulation comporte des risques de pertes et le traitement des documents dans divers services ne peut pas être effectué sans que de multiples copies soient faites, traitées et archivées. Il en résulte une multiplication des documents initiaux et un volume de travail considérable qui est automatiquement amplifié du fait que chaque copie de document initial engendre son propre circuit de traitement de vérification, de classement et d'archivage. Il en résulte des coûts élevés et des pertes de temps importantes dans le traitement des documents, sans parler de l'incidence sur l'augmentation de la main-d'oeuvre requise et l'accroissement des sources d'erreurs.

On a tenté de résoudre ces problèmes en développant un procédé décrit dans la demande de brevet français FR-A-2 705 808. Selon ce procédé, les pièces comptables sont regroupées et classées dans l'ordre chronologique avec attribution d'éléments d'identification. Les pièces sont ensuite scannées et peuvent être archivées. Les pièces numérisées peuvent alors être traitées, le traitement pouvant se faire à distance grâce à une transmission par modem par exemple. Ce procédé présente notamment l'inconvénient de traiter par lots des documents préalablement regroupés et classés, sur lesquels sont ensuite apposés des éléments d'identification préalablement à la saisie comptable. Cela signifie que le client est dessaisi de sa base d'informations constituée par ses pièces comptables pendant toute la durée de l'opération. De plus, ce procédé impose une préparation sur le papier par une personne qualifiée pour que les travaux requis puissent être ensuite exécutés par des collaborateurs moins qualifiés. D'autre part, ce procédé nécessite des équipements multiples et lourds (imprimante, scanner avec lecture automatique) qui doivent être prévus sur un même lieu, par exemple le cabinet comptable.

La présente invention se propose de pallier les inconvénients de ce procédé en offrant un procédé nouveau qui allège considérablement le circuit de traitement de documents et en particulier des documents comptables, qui réduit le risque d'erreurs et simplifie le classement et l'archivage de ces documents.

Ce but est atteint par le procédé selon l'invention dans lequel on procède du côté d'une unité d'entrée de ces documents à leur identification par attribution d'un ordre unique, à une numérisation de ces documents suivie de leur transmission, sous forme numérisée, vers une unité de traitement, ces documents étant ensuite traités puis rapprochés et liés à un système de gestion préétabli desdits documents du côté de cette unité de traitement, les documents traités étant enfin retournés vers l'unité d'entrée pour exploitation. On peut attribuer un numéro d'ordre unique au document en effectuant une numération physique dudit document. De préférence, on effectue ensuite une numérisation du document et de sa numération physique unique et on archive ledit document dans l'ordre de la numération.

Selon un mode de réalisation préféré du procédé, l'on procède à un traitement de l'image du document numérisé en vue d'y ajouter des informations ou des commentaires destinés à l'unité de traitement.

D'une manière particulièrement avantageuse, l'on regroupe les documents numérisés dans une boîte d'envoi électronique avant de les transmettre vers l'unité de traitement.

De préférence, l'on procède à la transmission automatique périodique de la boîte d'envoi vers l'unité de traitement.

Selon un mode de réalisation avantageuse, l'on combine du côté de l'unité de traitement deux phases de renseignements, la phase de renseignement de l'écriture comptable se déroulant par affichage de la pièce numérisée et la phase de renseignement de la pièce numérisée se déroulant par lecture des renseignements gérés par un logiciel de comptabilité.
D'une manière particulièrement avantageuse, on regroupe les documents traités dans une boîte d'envoi électronique avant de les retourner vers l'unité d'entrée pour exploitation.

Ce but est également atteint par l'équipement selon l'invention, caractérisé en ce qu'il comporte des moyens pour numériser les documents à traiter, des moyens pour transmettre les documents sous forme numérisée vers une unité de traitement, cette unité de traitement étant équipée de moyens pour assurer un traitement des documents en fonction d'un système de gestion préétabli et des moyens pour retourner les documents après traitement vers l'unité d'entrée pour exploitation.

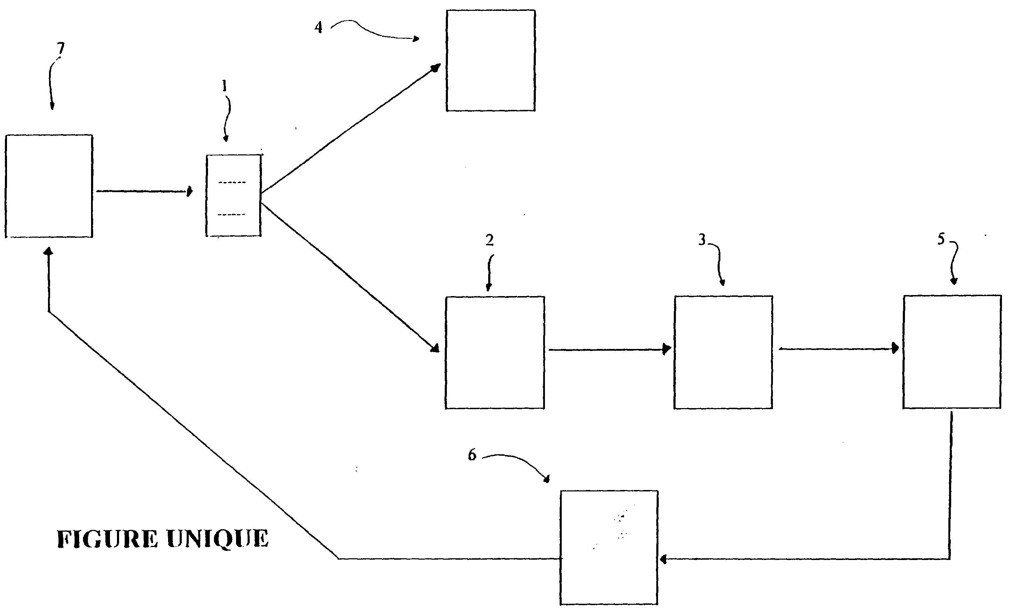

L'invention sera mieux comprise en référence à la description d'un mode de mise en oeuvre et d'une forme de réalisation de l'équipement qui lui est associé, et au dessin schématique de cet équipement, donné à titre d'exemple non limitatif.

Dans la pratique, une des applications particulièrement intéressante du procédé défini ci-dessus est le traitement de documents comptables, que l'on peut appeler la gestion numérique de pièces comptables.

Les pièces comptables 1, telles que par exemple des factures de fournisseurs, des abonnements, des bordereaux de taxes ou d'autres documents comptables attachés à la vie d'une entreprise, qui constitue l'unité d'entrée 7, sont identifiées et reçoivent un ordre unique sous la forme d'une marque physique comme par exemple un numéro d'ordre apposé manuellement ou au moyen d'un tampon incrémenter, ou sur une étiquette collée ou similaire.

On procède ensuite à la numérisation des pièces comptables, par exemple au moyen d'un micro-ordinateur 2 équipé d'un appareil de balayage optique. Cette numérisation peut être faite par un équipement standard tel qu'un lecteur à balayage couramment appelé scanner. Un traitement optionnel de l'image permet, le cas échéant, d'ajouter des informations, d'annoter, d'associer des commentaires ou des instructions aux données de balayage contenues dans la pièce comptable. Toutefois, ce traitement complémentaire n'est pas requis obligatoirement. Lors de la numérisation, un numéro d'unicité informatique absolue est établi par un procédé informatique sans intervention humaine et sans préparation. Ce numéro identifie de façon unique le document numérisé et constitue un pivot logique comme cela sera décrit ci-après.

Les pièces comptables numérisées ainsi complétées sont rassemblées automatiquement dans une boîte d'envoi électronique 3.

L'étape suivante consiste à archiver les pièces comptables 1, selon un classement d'archives qui correspond audit ordre unique précisé ci-dessus. L'ordre unique est suffisant et aucun préclassement n'est nécessaire, étant donné que par l'informatique il est possible à tout moment de retrouver un document numérisé et d'aboutir finalement à la boîte d'archives 4 correspondant à ce document. En d'autres termes, la recherche est informatique et non manuelle, même si la finalité de cette recherche peut être le repérage physique d'un document classé. Cette recherche s'effectue d'une manière très simple à l'aide de tous les renseignements d'un logiciel de comptabilité.

Les avantages de la transcription en langage numérique sont:
- la facilité d'un envoi sur un réseau comparée à une transmission physique,
- la possibilité d'imprimer le document numérisé à tout moment sans déplacer physiquement le papier original,
- la possibilité de consulter le document sur écran sans recherche physique dans les dossiers d'archives.

De façon périodique, la boîte d'envoi électronique 3 est expédiée automatiquement par télétransmission vers une unité de traitement 5, par exemple chez un expert comptable. A cet effet, les supports de télétransmission courants tels que par exemple le réseau téléphonique commuté à des lignes numériques, la liaison Internet ou les réseaux privés peuvent être utilisés. Les pièces comptables dématérialisées sont acheminées sous forme numérique.

Du côté de l'expert comptable, c'est-à-dire à la réception des boîtes d'envoi, une boîte de réception correspond à chaque émetteur. Un pré-traitement de chaque boîte est possible.

Ce pré-traitement peut être de différentes natures : par exemple, un premier pré-traitement visuel consistant à prendre en considération les notes et/ou les commentaires associés au document comptable après sa numérisation. Il peut également comporter une phase de nettoyage et de recadrage de l'image sur l'écran.

Par exemple, un deuxième pré-traitement comptable consiste à lire et analyser le document, à le ventiler et à lui attribuer une imputation comptable, puis à classer les documents par journaux. Ces documents sont ensuite envoyés vers un poste de saisie, un centre de saisie ou vers un poste de travail délocalisé, appelé télé-travailleur.

Ensuite, la saisie comptable s'effectue par juxtaposition de la pièce en support et de l'outil de saisie d'écritures. Elle ne nécessite aucune saisie supplémentaire et se déroule normalement, sans ajout de procédure, quel que soit le logiciel comptable.

Quel que soit le logiciel comptable, le procédé employé permet de lier la pièce numérisée à l'écriture comptable sans qu'il soit nécessaire d'avoir accès au logiciel source comptable.

Etant donné que la saisie comptable s'effectue au clavier, cette opération est utilisée pour renseigner simultanément la comptabilité et la pièce numérisée. Le procédé de renseignement de l'écriture comptable se déroule par affichage simple de la pièce numérisée. Le procédé de renseignement de la pièce numérisée se déroule par lecture simple des renseignements gérés par le logiciel de comptabilité. Ces deux procédés de renseignements se combinent et sont indissociables. La liaison entre la fiche d'information et la pièce comptable est constituée par le numéro unique de la pièce attribué lors de la numérisation et de la fiche associée. Ce numéro d'unicité informatique absolue donné automatiquement constitue un pivot logique qui permet d'associer les informations saisies au document numérisé. Toutes les opérations peuvent alors être prises en charge par l'informatique. Le procédé de traitement comptable peut être fait à distance et de façon asynchrone (télétravail).

Ensuite, la pièce comptable agrémentée d'informations est retournée à son expéditeur pour exploitation. Pour cela, l'ensemble des pièces traitées par la comptabilité, à savoir les pièces numérisées et les informations comptables qui leur sont attachées, est regroupé dans une boîte d'envoi électronique 6 à destination de l'unité d'entrée 7. Périodiquement, la boîte d'envoi 6 est réexpédiée automatiquement par télétransmission. Les pièces traitées reçues viennent alimenter la base de données de gestion de l'entreprise. L'accès à cette base de données peut se faire par divers paramètres de recherche tels que la date, le compte, le montant, etc. La gestion peut se faire au quotidien par divers outils de gestion tels que l'échéancier fournisseur, l'échéancier client, les rappels, la trésorerie prévisionnelle, etc... Associées aux renseignements donnés par le logiciel de comptabilité, les pièces comptables peuvent faire l'objet de traitements combinés avec tout utilitaire de gestion tel qu'un échéancier, un système de procédure de bon à payer ou des dossiers de prix de revient, etc...

Ce procédé permet également un archivage numérique et par conséquent un accès direct et rapide à des justificatifs comptables par l'utilisation de critères de recherche tels que le numéro d'ordre chronologique de la pièce, le numéro ou le code d'identification du compte, la date, le montant, etc... L'archivage peut être fait sur n'importe quel support de données numériques, comme par exemple le disque lecture laser. La recherche de pièces archivées peut être faite sans nécessiter une manipulation longue et fastidieuse de pièces comptables sur un support papier.

On notera en outre que le procédé autorise une redondance en ce qui concerne la sauvegarde. Celle-ci est à la fois physique et logique. Elle peut être effectuée sur des sites distincts.

Les avantages principaux de ce procédé sont:
- la dématérialisation et l'archivage immédiat des documents sur un support numérisable,
- la télétransmission des pièces et en particulier des documents comptables à saisir,
- la saisie comptable et le renseignement des pièces numérisées,
- l'exploitation facilitée de la saisie comptable,
- la communication plus directe avec l'expert chargé du traitement des documents et en particulier avec l'expert comptable,
- la certification de la comptabilité grâce à la numérotation unique,
- cette numérisation unique combinée avec l'archivage renseigné par les informations issues de la comptabilité donne naissance à un dispositif sécurisé, inaliénable et probant par séparation des tâches et chronologie de construction.

La présente invention n'est pas limitée à l'exemple de réalisation décrit mais s'étend à toute modification et variante évidente pour un homme du métier.

## Revendications

1. Procédé de traitement de documents (1) et notamment de documents comptables, dans lequel on procède, du côté d'une unité d'entrée (7) de ces documents à leur identification par attribution d'un ordre unique, à une numérisation de ces documents suivie de leur transmission, sous forme numérisée, vers une unité de traitement (5), ces documents étant ensuite traités puis rapprochés et liés à un système de gestion préétabli desdits documents du côté de cette unité de traitement (5), les documents traités étant enfin retournés vers l'unité d'entrée (7) pour exploitation.

2. Procédé selon la revendication 1, caractérisé en ce que l'on attribue un numéro d'ordre unique au document en effectuant une numération physique dudit document.

3. Procédé selon la revendication 2, caractérisé en ce que l'on effectue une numérisation du document et de sa numération physique unique et en ce que l'on archive physiquement ledit document dans l'ordre de la numération.

4. Procédé selon la revendication 1, caractérisé en ce que l'on procède à un traitement de l'image du document numérisé en vue d'y ajouter des informations et des commentaires destinés à l'unité de traitement (5).

5. Procédé selon la revendication 1, caractérisé en ce que l'on regroupe les documents numérisés dans une boîte d'envoi électronique (3) avant de les transmettre vers l'unité de traitement (5).

6. Procédé selon la revendication 5, caractérisé en ce que l'on procède à la transmission automatique périodique de la boîte d'envoi (3) vers l'unité de traitement (5).

7. Procédé selon la revendication 1, caractérisé en ce que, du côté de l'unité de traitement (5), l'on combine deux phases de renseignements, la phase de renseignement de l'écriture comptable se déroulant par affichage de la pièce numérisée et la phase de renseignement de la pièce numérisée se déroulant par lecture de renseignements gérés par un logiciel de comptabilité.

8. Procédé selon la revendication 1, caractérisé en ce que l'on regroupe les documents traités dans une boîte d'envoi électronique (6) avant de les retourner vers l'unité d'entrée (7) pour exploitation.

9. Equipement pour le traitement de documents (1) et notamment de documents comptables, selon le procédé des revendications 1 à 8, caractérisé en ce qu'il comporte des moyens (2) pour numériser les documents à traiter, des moyens (3) pour transmettre les documents sous forme numérisée vers une unité de traitement (5), cette unité de traitement étant équipée de moyens pour assurer un traitement des documents en fonction d'un système de gestion préétabli, et des moyens (6) pour retourner les documents après traitement vers l'unité d'entrée (7) pour exploitation.
